# EUROPÄISCHE PATENTANMELDUNG

(11) **EP 0 881 422 A1**
(43) Veröffentlichungstag der Anmeldung: **02.12.1998**
(21) Anmeldenummer: 98105484.4
(22) Anmeldetag: 26.03.1998
(51) Int. Cl.: F16L 51/03, F01N 7/08, F01N 3/28

(54) **Leitungselement mit wenigstens zwei Bälgen und einem diese verbindenden Zwischenrohr**

(30) Priorität: 30.05.1997 DE 19722603
(71) Anmelder: Witzenmann GmbH Metallschlauch-Fabrik Pforzheim, D-75175 Pforzheim (DE)
(72) Erfinder: Burkhardt, Carlo, Dr., 75331 Grunbach (DE)
(74) Vertreter: Lemcke, Rupert, Dipl.-Ing.

(57) **Zusammenfassung**

Es wird ein Leitungselement mit wenigstens zwei Bälgen (1,2) sowie ein diese verbindenden Zwischenrohr (3) angegeben, wobei der Innendurchmesser des Zwischenrohres (3) im wesentlichen dem freien Innendurchmesser der angrenzenden Bälge (1,2) entspricht. Dabei ist vorgesehen, daß konzentrisch und mit äußerem radialem Abstand zum Zwischenrohr (3) ein Verstärkungsrohr (11) vorgesehen ist, und daß die Enden des mit seinem Innendurchmesser dem Außendurchmesser der Bälge (1,2) entsprechenden Verstärkungsrohres (11) mit den nach radial außen gerichteten Weilenbergen der sich an das Zwischenrohr (3) anschließenden ersten Balgwellen (4,5) der Bälge (1,2) verbunden ist.

## Beschreibung

Die Erfindung betrifft ein Leitungselement, insbesondere für Abgas- und Abgasrückführleitungen von Verbrennungsmotoren bei Kraftfahrzeugen, mit einem mit zylindrischen Anschlußenden versehenen ein- oder oder mehrwandigen Leitungsteil aus Metall, das axial mit Abstand hintereinander wenigstens zwei ringgewellte Bälge enthält sowie ein benachbarte Bälge verbindendes einstückig an dieses angeformtes Zwischenrohr mit dem Balgmaterial hinsichtlich seines Materialquerschnittes entsprechender Wandung, wobei der Innendurchmesser des Zwischenrohres im wesentlichen dem freien Innendurchmesser der angrenzenden Bälge entspricht.

Ein derartiges Leitungselement dient innerhalb der Rohrleitung, in der es angeordnet ist, als Universalkompensator, indem es sowohl gegenseitige Lateralbewegungen als auch Angularbewegungen sowie Axialbewegungen der durch das Leitungselement verbundenen Rohrleitungsabschnitte ausgleichen kann. Üblicherweise besteht das Leitungselement aus Metall, gegebenenfalls rostfreiem Stahl insbesondere bei der Verwendung im Kraftfahrzeugmotorenbau. Für andere Anwendungsfalle ist jedoch auch ein Leitungselement aus nicht metallischem Werkstoff. insbesondere geeignetem Kunststoff denkbar.

Wie erwähnt, kann das Leitungselement aus einwandigem Material hergestellt sein. Je nach den Umständen des Einzelfalles kommt jedoch auch mehrwandiges Material in Frage, um die Flexibilität der Bälge zu erhöhen und gegebenenfalls Materiallagen unterschiedlicher Werkstoffe zu verwenden im Hinblick auf deren Widerstandsfähigkeit gegenüber bestimmten Anspruchsgrößen wie zum Beispiel chemische, Temperatur- oder mechanische Belastungen.

Bei bekannten Bauformen eines solchen Leitungselementes wird für das dann mit den Bälgen zum Beispiel durch Schweißen verbundene Zwischenrohr Material mit einer gegenüber dem Balgmaterial größeren Wandstarke verwendet, damit das Zwischenrohr den auf es einwirkenden Belastungen Stand halten kann. Aufgrund der dadurch gegebenen Masse des Zwischenrohres wirkt es jedoch durch die verhältnismäßige Weichheit der es tragenden Bälge als Massenschwinger, der folglich durch sehr aufwendige Maßnahmen mit Tilgermassen auf den jeweiligen Anwendungsfall abgestimmt werden muß. Im übrigen wird das Bauteil durch die erwähnten Schweißnähte teuer und durch die Masse des Zwischenrohres schwer.

Eine andere Bauform versucht diese Probleme dadurch zu umgehen, daß Bälge und Zwischenrohr einstückig aus dem gleichen Grundmaterial geformt werden. Damit ist jedoch das Problem erkauft, daß das Zwischenrohr für viele Anwendungsfalle nicht die erforderliche Festigkeit aufweist.

Aufgabe der Erfindung ist es daher, ein Leitungselement der eingangs genannten Art so zu gestalten, daß beiden vorgenannten Problembereichen gleichermaßen durch tragbare zusätzliche Maßnahmen begegnet wird.

Diese Aufgabe ist erfindungsgemäß dadurch gelöst, daß konzentrisch und mit äußerem radialem Abstand zum Zwischenrohr ein Verstärkungsrohr vorgesehen ist, und daß die Enden des mit seinem Innendurchmesser dem Außendurchmesser der Bälge entsprechenden Verstärkungsrohres mit den nach radial außen gerichteten Wellenbergen der sich an das Zwischenrohr anschließenden ersten Balgwellen der Bälge verbunden ist.

Durch diese erfindungsgemäßen Maßnahmen ist einmal erreicht, daß die aus Bälgen und Zwischenrohr bestehende Baueinheit einstückig und simultan aus einem einheitlichen Vormaterial gefertigt werden kann, so daß die Bälge und das Zwischenrohr verbindende Schweißnähte fortfallen, die wegen der an sie gestellten hohen Anforderungen hinsichtlich Belastungsfähigkeit und Dichtigkeit sowie der Überbrückung unterschiedlicher Materialquerschnitte hohe Ansprüche an das Fachpersonal stellen.

Zum anderen ist aber die erforderliche Festigkeit im Bereich des Zwischenrohres durch das Verstärkungsrohr hergestellt, an das von der Materialseite her keine hohen Anforderungen gestellt werden müssen und dessen endständige Befestigung an den zugeordneten Balgwellen ebenfalls auf einfache und billige Weise erfolgen kann, da auch hier keine besonderen Anforderungen insbesondere hinsichtlich Dichtigkeit bestehen.

Damit ist ein verhältnismäßig einfach und kostengünstig herstellbares Bauteil geschaffen, das andererseits hohen Anforderungen hinsichtlich Dichtheit und Abkopplung von Schwingungen genügt.

Das Verstärkungsrohr kann ein Metallrohr sein. Es besteht jedoch selbst bei einem Leitungsteil aus Metall auch die Möglichkeit der Verwendung eines Verstärkungsrohres beispielsweise aus einem geeigneten Kunststoffmaterial, da das Verstärkungsrohr nicht dem durch das Leitungsteil geführten Medium ausgesetzt ist und auch hinsichtlich einer damit eventuell einhergehenden Temperaturbelastung durch den radialen Abstand gegenüber dem Zwischenrohr abgekoppelt ist.

Zweckmäßig kann es sein, daß die der Verbindung des Verstärkungsrohres dienenden Wellenberge einen zur Balgachse parallelen Abschnitt bildend abgeflacht sind, und daß der Außendurchmesser der Abschnitte dem Innendurchmesser der darauf befestigten Enden des Verstarkungsrohres entspricht. Durch diese Maßnahme bilden die betroffenen Balgwellen auf ihrer Außenseite zylindrische Auflageflächen, an denen sich die Enden des Verstärkungsrohres leicht befestigen lassen, wobei auch ein verhältnismäßig großer Toleranzbereich hinsichtlich der Länge des Verstärkungsrohres zulässig ist. Die Montage des Verstärkungsrohres erfolgt im übrigen grundsätzlich dadurch, daß dieses nach Fertigstellung des Leitungsteiles auf dieses aufgeschoben wird.

Die Verbindung der Enden des Verstärkungsrohres mit den betroffenen Wellenbergen kann je nach den Umständen des Einzelfalles auf unterschiedliche Weise erfolgen. So kann ein aus Kunststoff bestehendes Verstärkungsrohr mit Hilfe eines geeigneten Klebers befestigt werden. Bei aus Metall bestehenden Einzeiteilen wird jedoch vielfach die Verwendung einer Schweißverbindung geeignet sein, wobei diese nicht einmal über den gesamten Umfang ausgeführt sein muß, vielmehr eine Reihe von über den Umfang verteilten Schweißpunkten ausreichend sein kann.

Andererseits besteht jedoch auch die Möglichikeit, daß die Enden des Verstärkungsrohres mit den Wellenbergen durch Einrollen und/oder Verpressen verbunden sind.

Im einfachsten Falle kann vorgesehen sein, daß das Zwischenrohr und/oder das Verstärkungsrohr glattwandig ausgebildet sind. Es besteht jedoch zur Beeinflußung der Steifigkeit und des Eigenschwingungsverhaltens auch die Möglichkeit, daß das Zwischenrohr und/oder das Verstärkungsrohr eine Profilierung aufweisen, die insbesondere durch Längs- und/oder Quer- und/oder Diagonalsicken gebildet ist, wobei die Sicken zweckmäßig nach radial außen gerichtet sind.

Durch die insoweit beschriebene Gestaltung des Erfindungsgegenstandes besteht nun aber auch die besonders vorteilhafte Möglichkeit, in dem durch das Zwischenrohr und das Verstärkungsrohr gebildeten Ringraum gegebenenfalls temperaturbeständige Mittel zur Schwingungs- und/oder Wärmeübergangsdämpfung unterzubringen. Der Platz für diese Mittel ist ohnehin vorhanden. Andererseits sind diese Mittel nun aber auch gekapselt und damit weitgehend vor äußeren Einflüssen geschützt, so daß auch solche Mittel Verwendung finden können, deren Eigenstabilität bzw. Stabilität gegen äußere Einflüsse nur gering ist.

Die Mittel zur Schwingungs- und/oder Wärmeübergangsdämpfung können durch Formteile aus Metallgestricke, -geflecht oder Metallfaserwirrlage, aus Keramikvlies oder Kunststoffschaum gebildet sein je nachdem, wie in geeigneter Weise einem unerwünschten Schwingungsverhalten bzw. einem unerwünschten Wärmeübergang in geeigneter Weise begegnet werden kann.

Um die gegebenenfalls nicht den gesamten Ringraum einnehmenden Formteile zu befestigen, kann vorgesehen sein, daß diese durch die Profilierung von Zwischenrohr und/oder Verstärkungsrohr gegen Verschiebung abgestützt sind.

Im Rahmen der vorstehend diskutierten Gestaltung kann es außerdem zweckmäßig sein, daß das Leitungsteil aus wenigstens dreilagigem Material besteht, und daß eine Mittellage durch wärmedämmendes und, oder schwingungsdämpfendes Material gebildet ist. Diese einzeln oder auch zusätzlich mögliche Maßnahme erlaubt die entsprechende Gestaltung des gesamten Leitungsteiles dahingehend, daß beispielsweise einer Wärmeabstrahlung oder auftretenden Resonanzschwingungen entgegengewirkt ist, wobei auch hier wieder das die Mittellage bildende Material insbesondere gegenüber äußeren mechanischen Einflüssen geschützt ist und gleichzeitig mit der Erstellung des Wandmaterials für das Leitungsteil angebracht sowie bei der Formgebung des Leitungsteiles mit verformt werden kann.

In an sich bekannter Weise kann ferner vorgesehen sein, daß die Bälge und gegebenenfalls das Verstärkungsrohr mit einem Geflechts- oder Gestrickeschlauch aus Metalldraht ummantelt sind, und daß die Enden dieses Schlauches an den freien Balgenden und gegebenenfalls an den Enden des Verstärkungsrohres festgelegt sind. Dabei können die Schlauchenden in Stützringen aus Metall sitzen und mit diesen gemeinsam auf den freien Balgenden bzw. auf den Enden des Verstarkungsrohres durch ein Fügeverfahren festgelegt sein, wobei beispielsweise die Schlauchenden zusammen mit den Stützringen auf das Leitungsteil aufgeschweißt sein können. Ein solcher Geflechts- oder Gestrickeschlauch kann eine innendruckbedingte Tendenz des Leitungsteiles zu einer Längenvergrößerung abstützen. Im übrigen schützt der das Bauteil gegenüber äußeren mechanischen Einflüssen und wirkt gleichzeitig ebenfalls schwingungsdämpfend.

Ferner kann vorgesehen sein, daß im Leitungsteil zur Medienführung ein mit wenigstens einem seiner Enden an einem Ende des Leitungsteiles festgelegtes Führungsmittel in Form eines Geflechtsschlauches aus Metalldraht, eines Agraffschlauches oder eines Innenschutzrohres angeordnet ist, das sich wenigstens über einen Teil der Länge des Leitungsteiles erstreckt. Diese an sich bekannte Maßnahme dient in an sich bekannter Weise der Glättung des Medienstromes innerhalb des Leitungsteiles und ebenso nicht nur der Schwingungsdämpfung sondern auch dem Schutz der Innenwandung des Leitungsteiles insbesondere gegen hohe Temperaturen.

Findet der Gegenstand der Erfindung innerhalb der Abgasleitung eines Verbrennungsmotors von mit Katalysator betriebenen Fahrzeugen oder Dieselmotoren mit nachgeschaltetem Partikel- oder Rußfilter Verwendung, so besteht schließlich die Möglichkeit, daß im Zwischenrohe ein Vorkatalysator, ein Partikelfilter oder ein Rußfilter angeordnet ist Für den Fall eines Vorkatalysators kann dieses Zwischenrohr in der beschriebenen Weise mit einer äußerst guten Wärmeisolierung versehen sein, um die Arbeitsweise des Vorkatalysators zu ermöglichen bzw. zu unterstützen.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figur 1: eine Grundbauform des erfindungsgemäßen Leitungselementes, teilweise im Axialschnitt und
- Figuren 2 bis 6: Abwandlungen des Leitungselementes gemäß Figur 1.

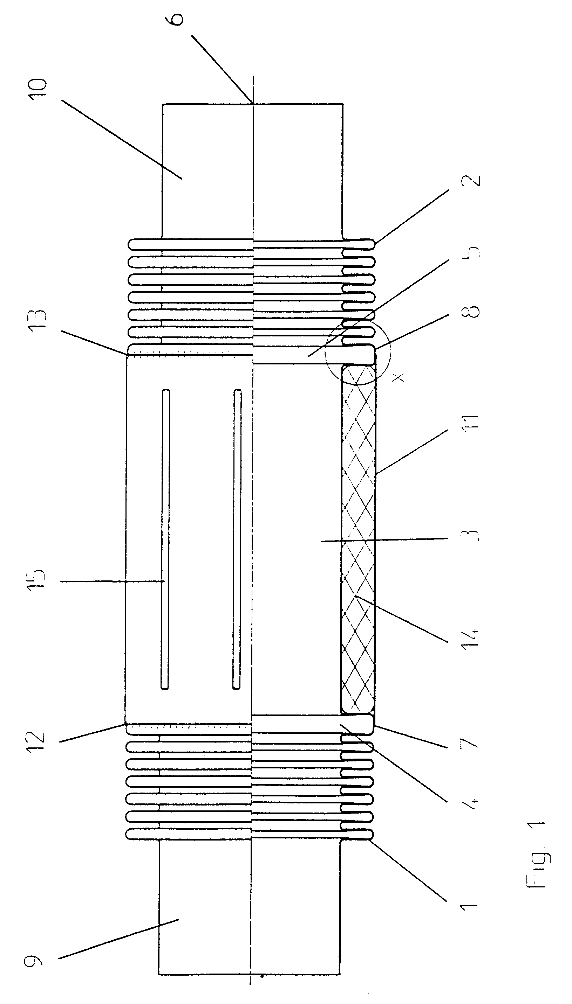

Das in Figur 1 dargestellte Leitungselement aus Metall weist ein Leitungsteil auf, das aus zwei ringgewellten Bälgen 1, 2 besteht, die einstückig durch ein Zwischenrohr 3 miteinander verbunden sind, das von den aufeinanderzugerichteten Flanken der unmittelbar an das Zwischenrohr 3 angrenzenden Balgwellen 4, 5 ausgeht. Die Wellenberge der Balgwellen 4 und 5 weisen einen zur Balgachse 6 parallelen. abgeflachten Zylinderabschnitt 7, 8 auf, dessen Außendurchmesser dem Außendurchmesser der übrigen Balgwellen entspricht.

Das so ausgebildete Leitungsteil hat durch die freien Enden der Bälge 1. 2 gebildete zylindrische Anschlußenden 9, 10, die mit nicht dargestellten, weiterführenden Leitungsteilen beispielsweise einer Kraftfahrzeugabgasanlage verbunden sind, indem sie mit diesen Leitungsteilen beispielsweise verschweißt oder aufgesteckt sind.

Auf das Leitungsteil ist ein Stützrohr 11 in die dargestellte, zum Zwischenrohr 3 längssymmetrische Position geschoben. Der Innendurchmesser des Stützrohres 11 entspricht dem Außendurchmesser der Bälge 1, 2. Das Stützrohr 11 ist auf den Balgwellen 4, 5 festgelegt, indem die Stützrohrenden mit den Zylinderabschnitten 7, 8 durch Schweißnähte 12, 13 verbunden sind. Anstelle solcher durchgehender Schweißnähte 12, 13 können auch kurze Schweißnahtstücke oder einzelne, über den Umfang symmetrisch verteilte Schweißpunkte Verwendung finden.

In den durch das Zwischenrohr 3 einerseits und das Stützrohr 11 andererseits gebildeten Ringraum ist eine diesen Ringraum praktisch ausfüllende Einlage aus wärmeisolierendem und schwingungsdämpfendem Material 14 eingebracht, die insbesondere dazu dient, Schwingungen des Zwischenrohres 3 auszudämpfen. Außerdem ist das Verstärkungsrohr 11 mit parallel zur Achse 6 angeordneten, nach radial außenstehenden Längssicken 15 versehen, die dem Verstärkungsrohr eine zusätzliche Steifigkeit und damit erhöhte Tragfähigkeit verlangen.

Die Einlage 14 kann, wenn Sie aus einem selbsttragenden Hohlzylinder ihres Materials besteht, vor dem Ausformen der Bälge 1, 2 auf das diese bildende Vormaterial aufgesetzt sein. Es besteht jedoch auch die Möglichkeit, eine solche Einlage als zwei Halbschalen herzustellen, die nach der Fertigstellung des aus den Bälgen 1, 2 und dem Zwischenrohr 3 bestehenden Leitungsteils auf das Zwischenrohr 3 vor dem Aufschieben des Verstärkungsrohres 11 aufgesetzt werden. Schließlich kann eine solche Einlage aus einem anderen, beispielsweise bandförmigem Material auch vor dem Aufschieben des Verstärkungsrohres 11 auf das Zwischenrohr 3 aufgewickelt werden.

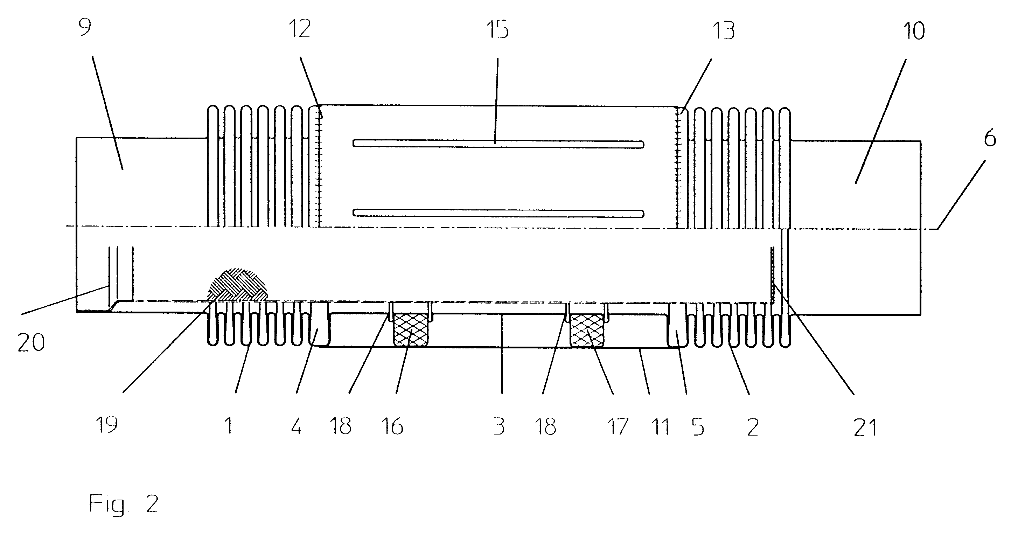

Die Figuren 2 bis 6 zeigen Abwandlungen des Gegenstandes gemäß Figur 1, die mit diesem hinsichtlich des Grundaufbaues des Leitungsteiles übereinstimmen, weshalb insoweit auch die bereits eingeführten Bezugszeichen weiterverwendet werden, ohne die dazu gehörende Beschreibung noch einmal zu wiederholen.

Die Bauform gemäß Figur 2 weicht von der gemäß Figur 1 dadurch ab, daß die Einlage durch zum Beispiel aus zwei Hälften gebildete Ringe 16, 17 dargestellt ist, die axial untereinander und gegenüber den benachbarten Balgwellen 4, 5 beabstandet sind. Damit die Ringe 16, 17 sich im Betrieb nicht axial verschieben können, weißt das Zwischenrohr 3 ringförmig umlaufende und nach radial außen vorstehende Sicken 18 auf, zwischen denen die Ringe 16, 17 gehalten sind. Die durch die Ringe 16, 17 gebildete Einlage dient im wesentlichen der Schwingungsdämpfung.

Außerdem ist in das innere des Leitungsteils 1, 2, 3 ein Schlauch 19 aus Metalldrahtgeflecht eingesetzt dessen Außendurchmesser um einen geringen Betrag kleiner ist als der Innendurchmesser der Bälge 1, 2 sowie des Zwischenrohres 3 und der der möglichst glatten Strömungsführung des durch das Leitungsteil gehenden Mediums dient. Der Schlauch 19 ist bezogen auf Figur 2 mit seinem linken Ende 20 innerhalb des Anschlußendes 9 beispielsweise durch Verschweißen festgelegt, während sein rechtes Ende 21 innerhalb des rechten Endbereiches des Balges 2 frei ist. Auf diese Weise ergibt sich ein Bauteils daß von links nach rechts zu durchströmen ist.

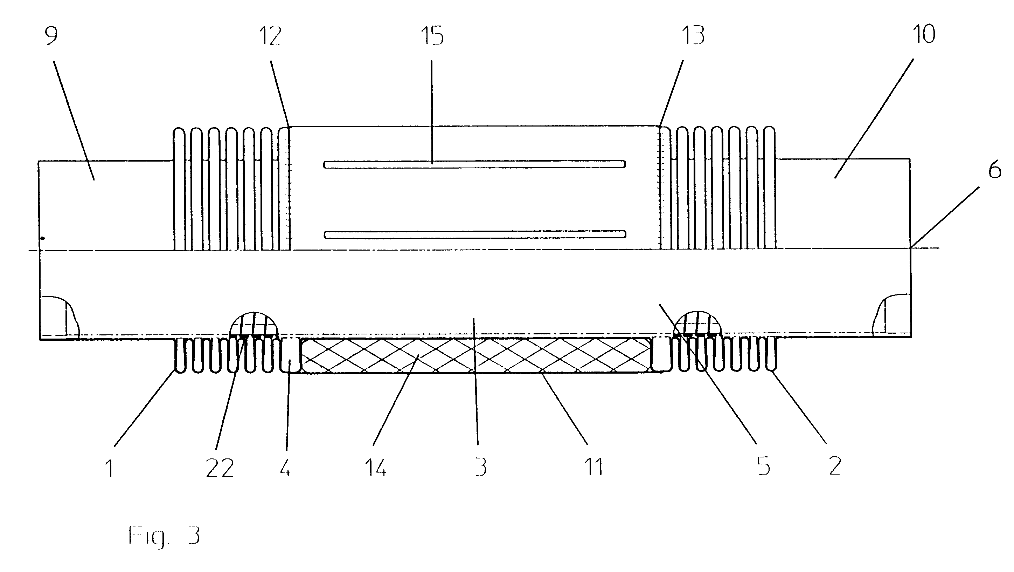

Der Gegenstand gemäß Figur 3 stimmt wieder mit dem gemäß Figur 1 überein, wobei ich jedoch hier ähnlich beim Gegenstand gemäß Figur 2 eine innere Auskleidung vorgesehen ist, die im vorliegenden Falle die Form eines schraubengangförmig gewickelten Agraffschlauches 22 aus Metall hat. Dieser Agraffschlauch 22 ist mit seinen beiden Enden innerhalb der Anschlußenden 9, 10 beispielsweise durch Schweißen festgelegt, wobei die Enden des Agraffschlauches 22 radial aufgeweitet sind, da der Agraffschlauch im übrigen einen gegenüber dem Innendurchmesser des Leitungsteiles geringeren Außendurchmesser aufweist.

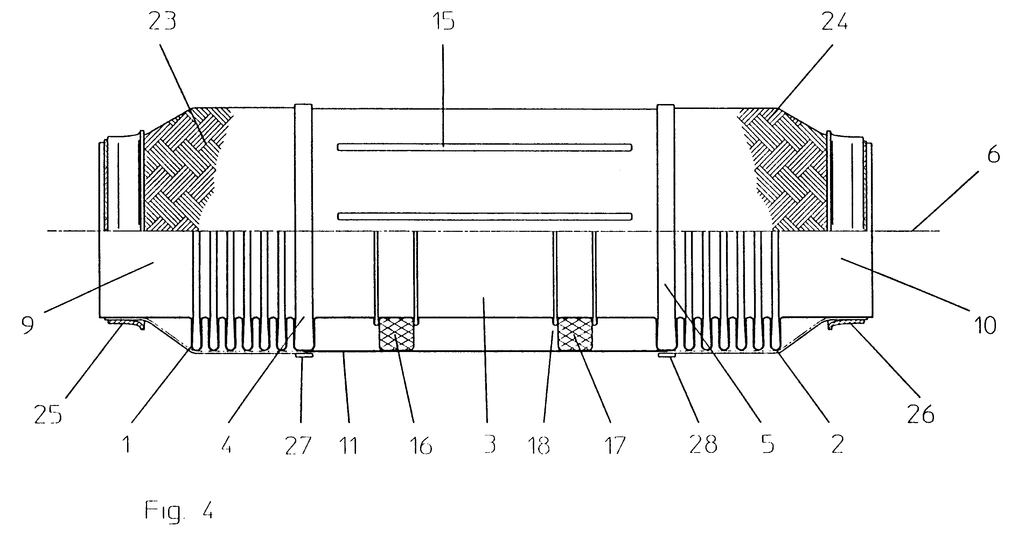

Der Gegenstand gemäß Figur 4 stimmt im wesentlichen mit dem gemäß Figur 2 überein, wobei jedoch der innere Geflechtsschlauch 19 gemäß Figur 2 fortgefallen ist. Demgegenüber sind äußere Geflechtsschlauchmäntel 23, 24 aus Metalldraht vorgesehen, die die Bälge 2, 3 überdecken. Die Geflechtsmäntel 23, 24 sind mit ihren Enden einerseits auf den Balgenden 9, 10 festgelegt, indem sie zusammen mit aufgesetzten Stützringen 25, 26 dort angeschweißt sind. Andererseits sind die Geflechtsmäntel 23, 24 im Bereich des Verstärkungsrohres 11 dort zusammen mit aufgesetzten Stützringen 27, 28 festgelegt, wobei die Stützringe 27, 28 mit dem Verstärkungsrohr 11 verschweißt oder auch durch radiale Querschnittsreduktion verpreßt sein können.

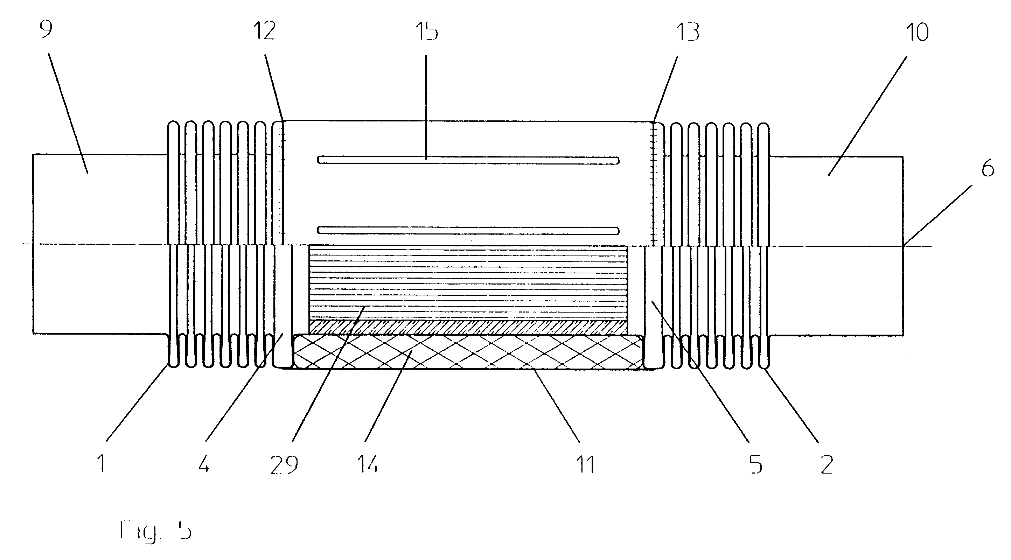

Die Bauform gemäß Figur 5 geht von der gemäß Figur 1 aus und weist eine Ergänzung dahingehend auf, daß in das Zwischenrohr 3 ein Vorkatalysator 29 eingesetzt und dort in geeigneter Weise axial festgelegt ist.

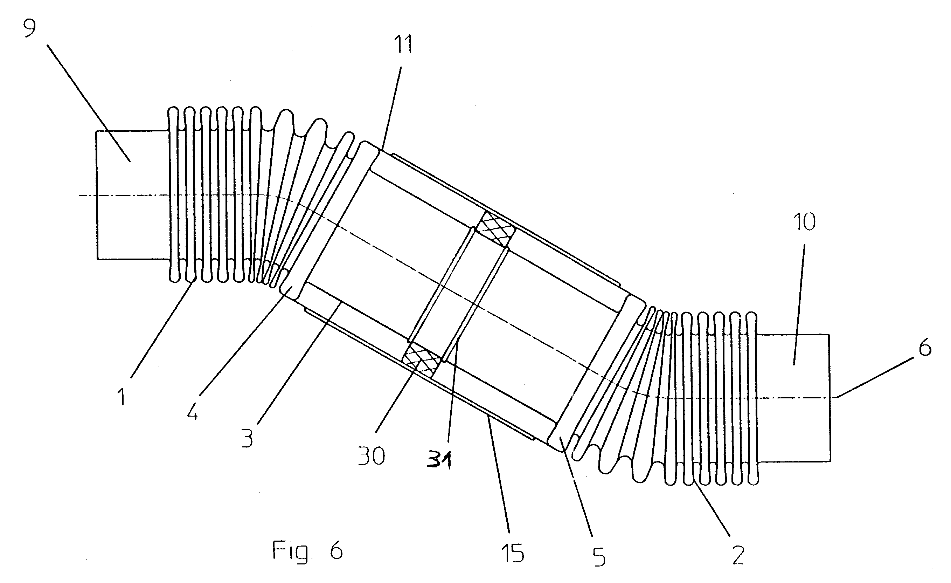

Schließlich zeigt Figur 6 ein Leitungsteil der beschriebenen Art, bei welchem in den durch Zwischenrohr 3 und Verstärkungsrohr 11 gebildeten Ringraum axial mittig nur eine ringförmige Einlage 30 eingesetzt ist, die insbesondere der Schwingungsdämpfung des Zwischenrohres 3 dient und wiederum durch umlaufende Sicken 31 des Zwischenrohres 3 gegen Axialverschiebung gehalten ist.

Figur 6 zeigt im übrigen den bisher beschriebenen Gegenstand in einer lateral ausgelenkten Stellung, wie sie auch für die übrigen Bauformen im Betrieb oder durch die Einbausituation in Frage kommt.

Bei allen beschriebenen Bauformen sind Zwischenrohr und Verstärkungsrohr als geradzylindrische Bauteile dargestellt. Selbstverständlich besteht je nach Einbausituation auch die Möglichkeit, diese Rohrabschnitte gekrümmt bzw. als Bogenstücke oder dergleichen auszubilden.

## Patentansprüche

1. Leitungselement, insbesondere für Abgas- und Abgasrückführleitungen von Verbrennungsmotoren bei Kraftfahrzeugen, mit einem mit zylindrischen Anschlußenden versehenen, ein- oder mehrwandigen Leitungsteil aus Metall, das axial mit Abstand hintereinander wenigstens zwei ringgewellte Bälge enthalt sowie ein benachbarte Bälge verbindendes, einstückig an diese angeformtes Zwischenrohr mit dem Balgmaterial hinsichtlich seines Materialquerschnittes entsprechender Wandung, wobei der Innendurchmesser des Zwischenrohres im wesentlichen dem freien Innendurchmesser der angrenzenden Bälge entspricht,
dadurch gekennzeichnet,
daß konzentrisch und mit äußerem radialem Abstand zum Zwischenrohr (3) ein Verstärkungsrohr (11) vorgesehen ist, und daß die Enden des mit seinem Innendurchmesser dem Außendurchmesser der Bälge (1, 2) entsprechenden Verstarkungsrohres (11) mit den nach radial außen gerichteten Wellenbergen der sich an das Zwischenrohr (3) anschließenden ersten Balgwellen (4, 5) der Bälge (1, 2) verbunden ist.

2. Leitungselement nach Anspruch 1,
dadurch gekennzeichnet,
daß das Verstärkungsrohr (11) aus Metall besteht.

3. Leitungselement nach Anspruch 1 oder 2,
dadurch gekennzeichnet,
daß die der Verbindung des Verstärkungsrohres (11) dienenden Wellenberge einen zur Balgachse (6) parallelen Abschnitt (7, 8) bildend abgeflacht sind, und daß der Außendurchmesser der Abschnitte (7, 8) dem Innendurchmesser der darauf befestigten Enden des Verstärkungsrohres (11) entspricht.

4. Leitungselement nach einem oder mehreren der Ansprüche 1 bis 3,
dadurch gekennzeichnet,
daß die Enden des Verstärkungsrohres (11) mit den Wellenbergen durch Schweißen (12, 13) verbunden sind.

5. Leitungselement nach einem oder mehreren der Ansprüche 1 bis 3,
dadurch gekennzeichnet,
daß die Enden des Verstärkungsrohres (11) mit den Wellenbergen durch Einrollen und/oder Verpressen verbunden sind.

6. Leitungselement nach einem oder mehreren der Ansprüche 1 bis 5,
dadurch gekennzeichnet,
daß das Zwischenrohr (3) und/oder das Verstärkungsrohr (11) glattwandig ausgebildet sind.

7. Leitungselement nach einem oder mehreren der Ansprüche 1 bis 5,
dadurch gekennzeichnet,
daß das Zwischenrohr (3) und/oder das Vestärkungsrohr (11) eine Profilierung aufweist.

8. Leitungselement nach Anspruch 7,
dadurch gekennzeichnet,
daß die Profilierung durch Längs- (15) und/oder Quer- (18, 31) und/oder Diagonalsicken gebildet ist.

9. Leitungselement nach Anspruch 7 oder 8,
dadurch gekennzeichnet,
daß die Sicken (15, 18, 31) nach radial außen gerichtet sind.

10. Leitungselement nach einem oder mehreren der Ansprüche 1 bis 9,
dadurch gekennzeichnet,
daß in den durch das Zwischenrohr (3) und das Verstärkungsrohr (11) gebildeten Ringraum gegebenenfalls temperaturbeständige Mittel (14, 16, 17, 30) zur Schwingungs- und/oder Wärmeübergangsdämpfung eingesetzt sind.

11. Leitungselement nach Anspruch 10,
dadurch gekennzeichnet,
daß die Mittel (14, 16, 17, 30) durch Formteile aus Metallgestricke, -geflecht oder Metallfaserwirrlage, aus Keramikvlies oder Kunststoffschaum gebildet sind.

12. Leitungselement nach einem oder mehreren der Ansprüche 1 bis 11,
dadurch gekennzeichnet,
daß die Formteile (16, 17, 30) durch die Profilierung (18, 31) von Zwischenrohr (3) und/oder Verstärkungsrohr (11) gegen Verschiebung abgestützt sind.

13. Leitungselement nach einem oder mehreren der Ansprüche 1 bis 12,
dadurch gekennzeichnet,
daß das Leitungsteil (1, 2, 3) aus wenigstens dreilagigem Material besteht, und daß eine Mittellage durch wärmedämmendes und/oder schwingungsdampfendes Material gebildet ist.

14. Leitungselement nach einem oder mehreren der Ansprüche 1 bis 13,
dadurch gekennzeichnet,
daß die Bälge (1, 2) und gegebenenfalls das Verstärkungsrohr (11) mit einem Geflechts- (23, 24) oder Gestrickeschlauch aus Metalldraht ummantelt sind, und daß die Enden dieses Schlauches an den freien Balgenden (9, 10) und gegebenenfalls an den Enden des Verstärkungsrohres (11) festgelegt sind.

15. Leitungselement nach Anspruch 14,
dadurch gekennzeichnet,
daß die Schlauchenden in Stützringen (25 bis 28) aus Metall sitzen und mit diesen gemeinsam auf den freien Balgenden (9, 10) bzw. auf den Enden des Verstärkungsrohres (11) durch ein Fügeverfahren festgelegt sind.

16. Leitungselement nach Anspruch 15,
dadurch gekennzeichnet,
daß die Schlauchenden zusammen mit den Stützringen (25 bis 28) durch Verschweißen festgelegt sind.

17. Leitungselement nach einem oder mehreren der Ansprüche 1 bis 16,
dadurch gekennzeichnet,
daß im Leitungsteil (1, 2, 3) zur Medienführung ein mit wenigstens einem seiner Enden (20) an einem Ende (9, 10) des Leitungsteiles (1, 2, 3) festgelegtes Führungsmittel in Form eines Geflechtsschlauches (19) aus Metalldraht, eines Agraffschlauches (22) oder eines Innenschutzrohres angeordnet ist, da es sich wenigstens über ein Teil der Länge des Leitungsteiles (1, 2, 3) erstreckt.

18. Leitungselement nach einem oder mehreren der Ansprüche 1 bis 17,
dadurch gekennzeichnet,
daß im Zwischenrohr (3) ein Vorkatalysator (29), ein Partikelfilter oder ein Rußfilter angeordnet ist.
